# EUROPÄISCHE PATENTSCHRIFT

(11) **EP 0 774 394 B1**
(45) Veröffentlichungstag und Bekanntmachung des Hinweises auf die Patenterteilung: **29.01.2003**
(21) Anmeldenummer: 96118336.5
(22) Anmeldetag: 15.11.1996
(51) Int. Cl.: B61G 5/02, B61D 3/10, B60D 5/00

(54) **Stadtbahnwagen**
Urban tram
Voiture de tramway

(30) Priorität: 20.11.1995 DE 19543172
(43) Veröffentlichungstag der Anmeldung: 21.05.1997
(73) Patentinhaber: SIEMENS AKTIENGESELLSCHAFT, 80333 München (DE)
(72) Erfinder: Talarowski, Gerd, 41812 Erkelenz (DE); Wehling, Ludwig, 46325 Borken (DE); Elsner, Karl-Heinz, 41748 Viersen (DE)

(56) Entgegenhaltungen:
- DE-A- 1 530 162
- DE-B- 1 052 435
- DE-B- 1 146 907
- DE-C- 422 433
- DE-C- 957 849

## Beschreibung

Die Erfindung bezieht sich auf einen Stadtbahnwagen, der zumindest einen bis auf Bewegungen in einer Größenordnung von etwa 1° drehfest mit einem Fahrwerk verbundenen Wagenkasten enthält, der mit einem angrenzenden Wagenkasten über ein Gelenk verbunden ist.

Derartige Stadtbahnwagen sind durch die Zeitschrift Stadtverkehr 3/95 bekannt, siehe beispielsweise die Abb. 31, 34, 45. Die Bewegungen des Fahrwerks werden durch die drehfeste Anbindung direkt auf den entsprechenden Wagenkasten übertragen. Dies kann vor allem bei Geradeausfahrt und Auftreten einer im Bereich der Eigenfrequenz liegenden Erregung zu Schlingerbewegungen (Schwänzelbewegungen) der Wagenkästen führen, die für die Fahrgaste unangenehm sind.

Der Erfindung liegt daher die Aufgabe zugrunde, bei einem Stadtbahnwagen der gattungsgemäßen Art auf möglichst einfache Weise den Fahrkomfort zu verbessern, indem Schlingerbewegungen vermieden werden.

Diese Aufgabe wird erfindungsgemäß dadurch gelöst, daß zwischen den Wagenkästen ein als hydraulisches System aus einer Kolbenstange, einem Zylinder und Ventilen gebildetes Koppelelement angeordnet ist, wobei dieses Koppelelement das Gelenk mit einer über die Schließkraft der Ventile erzeugten Grenzkraft fixiert und bei Überschreiten der Grenzkraft freigibt.

Durch die erfindungsgemäße Fixierung des Gelenks werden die Massen von zumindest zwei Wagenkästen gekoppelt, so daß sich sowohl Frequenz als auch Amplitude des schwingungsfähigen Systems günstig verändern. Schlingerbewegungen werden also vermieden.

Gelenkbahwagen mit einem System zur Dämpfung der Schlingerbewegungen sind z.B. durch die DE-AS-1 052 435 oder die DE-OS-1 530 162 bekannt.

Ein Ausführungsbeispiel der Erfindung ist in der Zeichnung schematisch dargestellt und wird im folgenden näher beschrieben. Es zeigen
- Fig. 1: einen Stadtbahnwagen in Seitenansicht,
- Fig. 2: eine Draufsicht auf einen Teilbereich des Stadtbahnwagens nach Fig. 1 mit einem hydraulischen Koppelelement.

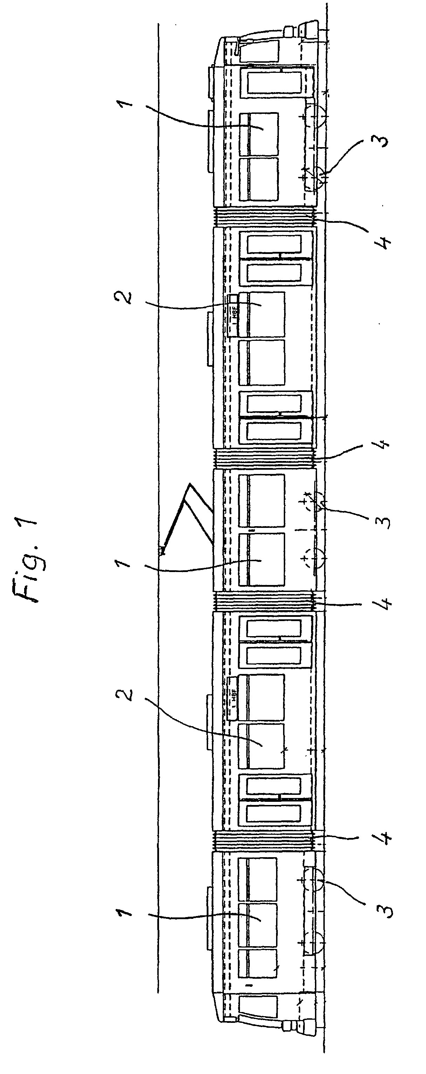

Gemäß Fig. 1 besteht der Stadtbahnwagen aus insgesamt fünf Wagenkästen. Von diesen sind die beiden jeweils einen Kopf bildenden Wagenkästen 1 sowie der mittlere Wagenkasten 1 weitgehend drehfest mit einem Fahrwerk 3 verbunden, d. h., die Drehbewegungen zwischen Wagenkasten 1 und Fahrwerk 3 liegen in einer Größenordnung von nur etwa 1°. Die vorgenannten Wagenkästen 1 und angrenzende Wagenkästen 2 sind jeweils über ein Gelenk 4 miteinander verbunden. Es kann auch ein Stadtbahnwagen mit mehr als fünf Wagenkästen gebildet werden; so ergibt sich beispielsweise ein 7 teiliger Stadtbahnwagen durch Anordnung eines zweiten mittleren Wagenkastens 1 mit Fahrwerk 3 und eines dritten angrenzenden Wagenkastens 2.

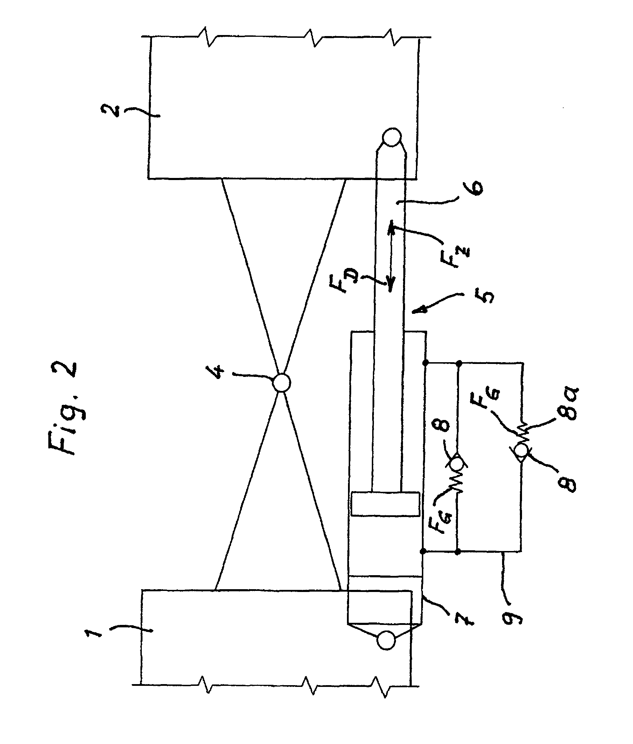

Wie aus Fig. 2 ersichtlich ist, befindet sich zwischen den Wagenkästen 1 und 2 ein Koppelelement 5 zum Fixieren des Gelenks 4. Bei fixiertem Gelenk 4 sind die Massen der Wagenkästen 1 und 2 gekoppelt, so daß sich sowohl Frequenz als auch Amplitude des schwingungsfähigen Systems so verändern, daß Schlingerbewegungen vermieden werden.

Das Koppelelement 5 ist durch ein hydraulisches System gebildet, das eine Kolbenstange 6, einen Zylinder 7 sowie Verbindungsleitungen 9 aufweist, in die Ventile 8 eingeschaltet sind. Durch die Kraft einer dem jeweiligen Ventil 8 zugeordneten Feder 8a wird eine Grenzkraft F_{G} des Koppelelements 5 definiert. Alternativ ist es möglich, die Grenzkraft F_{G} durch separate Druckbegrenzungsventile (nicht dargestellt) zu erzeugen. Es versteht sich, daß die Grenzkraft F_{G} im Hinblick auf einen entgleisungssicheren Betrieb kleiner sein muß als die Spurführungskräfte des Fahrwerks 3.

Bei der Einfahrt des Stadtbahnwagens in einen Gleisbogen und ebenso bei der Ausfahrt aus einem Gleisbogen ändert sich die Stellung der Wagenkästen 1 und 2 zueinander. Dabei tritt am Koppelelement 5 eine Zugkraft F_{Z} bzw. eine Druckkraft F_{D} auf, die größer ist als die Grenzkraft F_{G}, so daß die Wagenkästen 1 und 2 freigängige Drehbewegungen um das Gelenk 4 ausführen können.

Die beschriebene Koppelung kann an allen Gelenken 4 des Stadtbahnwagens erfolgen.

### Liste der Bezugszeichen

- 1: Wagenkasten (Wagenkopf bzw. in Wagenmitte)
- 2: angrenzender Wagenkasten
- 3: Fahrwerk
- 4: Gelenk
- 5: Koppelelement
- 6: Kolbenstange
- 7: Zylinder
- 8: Ventil
- 8a: Feder
- 9: Verbindungsleitung
- F_{G}: Grenzkraft
- F_{Z}: Zugkraft
- F_{D}: Druckkraft

## Patentansprüche

1. Stadtbahnwagen, der zumindest einen bis auf Bewegungen in einer Größenordnung von etwa 1° drehfest mit einem Fahrwerk (3) verbundenen Wagenkasten (1) enthält, der mit einem angrenzenden Wagenkasten (2) über ein Gelenk (4) verbunden ist, **dadurch gekennzeichnet, daß** zwischen den Wagenkästen (1, 2) ein als hydraulisches System aus einer Kolbenstange (6), einem Zylinder (7) und Ventilen (8) gebildetes Koppelelement (5) angeordnet ist, wobei dieses Koppelelement (5) das Gelenk (4) mit einer über die Schließkraft der Ventile (8) erzeugten Grenzkraft (F_{G}) fixiert und bei Überschreiten der Grenzkraft (F_{G}) freigibt.

## Claims

1. Metropolitan railway carriage, which contains at least one carriage body (1) which is connected to an undercarriage (3) fixedly in terms of rotation, with the exception of movements of an order of magnitude of about 1°, and which is connected via a joint (4) to an adjacent carriage body (2), **characterized in that** a coupling element (5) formed as a hydraulic system from a piston rod (6), a cylinder (7) and valves (8) is arranged between the carriage bodies (1, 2), this coupling element (5) fixing the joint (4) with a limit force (F_{G}) generated via the closing force of the valves (8) and releasing the said joint when the limit force (F_{G}) is exceeded.

## Revendications

1. Voiture de tramway comprenant au moins une caisse (1) de voiture, qui est assemblée à un bogie (3) en solidarité de rotation excepté des mouvements de l'ordre de grandeur d'environ 1° et qui est reliée par l'intermédiaire d'une articulation (4) à une caisse (2) de voiture adjacente, **caractérisée en ce qu'**un élément (5) d'accouplement, réalisé sous forme de système hydraulique constitué d'une tige (6) de piston, d'un cylindre (7) et de soupapes (8), est disposé entre les caisses (1, 2) de voiture, cet élément (5) d'accouplement immobilisant l'articulation (4) avec une force (F_{G}) limite produite par l'intermédiaire de la force de fermeture des soupapes (8), et la libérant en cas de dépassement de la force (F_{G}) limite.
